Europäisches Patentamt

European Patent Office

Office européen des brevets

(11) Publication number: **0 320 913**
**A2**

## EUROPEAN PATENT APPLICATION

(21) Application number: 88120913.4

(51) Int. Cl.⁴: **G01S 5/14** , **G01S 13/87**

(22) Date of filing: **14.12.88**

(30) Priority: **18.12.87 FI 875612**

(43) Date of publication of application:
**21.06.89 Bulletin 89/25**

(84) Designated Contracting States:
**AT BE CH DE ES FR GB GR IT LI LU NL SE**

(71) Applicant: **OY NOKIA AB**
**Mikonkatu 15 A**
**SF-00100 Helsinki(FI)**

(72) Inventor: **Otala, Matti**
**Wäinö Aaltosen tie 2 H**
**SF-00570 Helsinki(FI)**
Inventor: **Huttunen, Heikki**
**Kuusitie 4 as. 3**
**SF-24 260 Salo(FI)**

(74) Representative: **Liska, Horst, Dr. et al**
**Patentanwälte H. Weickmann, Dr. K. Fincke,**
**F.A. Weickmann, B. Huber, Dr. H. Liska, Dr. J.**
**Prechtel Möhlstrasse 22 Postfach 86 08 20**
**D-8000 München 86(DE)**

(54) **A method for locating a mobile station, as well as a mobile station and a base station for carrying out the method.**

(57) A method for locating a mobile station, and a mobile radio telephone station and a fixed base station for carrying out the method. Identity signals and a precise time pulse are transmitted from fixed radio telephone stations (S1-S5) of known locations. The transmission takes place either as a response to an interrogation transmitted from the mobile station or automatically at predetermined intervals. All of the fixed stations are in highly precise chronological synchronization, and the transmission time of a precise time pulse may be only a specific one, for example, occurring at 1-second intervals. As this interval is great compared with the travel time of the time pulse, it is possible, by eliminating any multiples of the fixed time interval, on the basis of the arrival time of the time pulses received at the mobile station, to calculate at any given time the distance difference between two fixed stations and, with the aid of at least three fixed stations, the location of the mobile station. All that the method requires is supplementation of an existing radio telephone network, and the signals concerning the localization can be transmitted, for example, on the auxiliary carrier waves of the system.

Fig. 1

# A method for locating a mobile station, as well as a mobile station and a base station for carrying out the method

The object of the present invention is a method for locating a mobile station, for example a station in a vehicle, in which method the mobile station receives signals from at least three fixed stations of known location and the location of the mobile station is calculated on the basis of the said signals. The invention also relates to a mobile radio telephone station and a base station for a radio telephone system, intended for carrying out the method.

Although the invention can be applied to the localization of any mobile radio telephone station, a radio telephone station in a vehicle has been thought of as its primary application, and the invention will also be described below in conjunction with such application.

Increasing attention will be paid in the future to the localization of vehicles by electronic means. Localization enables traffic to be controlled more flexibly than previously, for example in order to avoid traffic jams and temporary road blocks. Systems have already been conceived in which the location of an automobile can be determined, for example, by means of a special cable fitted along a road or by means of separately constructed transmitter stations. In such a case a map display may also be connected to a station in a vehicle, the display indicating the location of the vehicle at any given time.

It is, however, clear that such a specially constructed system causes considerable costs and that constructing such a system to cover very large areas is highly uneconomical.

The purpose of the present invention is therefore to pro vide a localization system which does not require unreasonable investment but is still capable of sufficient precision of localization almost everywhere. The idea of the invention lies in the use of an already existing automobile telephone network, which can with rather moderate additions be supplemented so that it can also serve the said locating purpose.

The method according to the invention is characterized in that a radio telephone network is used in such a manner that the fixed stations are maintained in precisely the same clock time, and that they are equipped to transmit, in addition to a signal indicating their identity, a precise time pulse, the transmission times of the time pulses being capable of appearing only at predetermined time intervals, for example at one-second intervals, that the mobile station receives both the identity signal and the time pulse, registers precisely the arrival time of the time pulse, and calculates, on the basis of the arrival times of the time pulses from the different fixed stations, the distance differences between the fixed stations, eliminating in the calculations the integer multiples of the predetermined time interval, these multiples being of an order of magnitude differing from the travel time differences of the time pulses.

The characteristics of the mobile radio telephone station as well as of the base station for the radio telephone system are stated respectively in Claims 7 and 9.

Thus the essential point in practice is that, on the one hand, all the base stations, i.e. the fixed stations, are maintained internally very precisely in the same clock time, and that the transmission of a time pulse from each station is made possible at only precisely specific times, for example at precisely one-second intervals, whereupon, in a comparison of the different reception times it is easy to eliminate any leaps of an order of magnitude greater than one or several seconds.

Since it is known that, today, it is possible to synchronize clocks and to transmit pulses with very high precision, for example with a precision of a few tens of nanoseconds, and since an electromagnetic wave travels about 3 meters in ten nanoseconds, it is clear that sufficient localization precision can be achieved by such a measuring system. In order for the system to work, it is, of course, essential that all the base stations are in precisely the same clock time, so that the distance of each station from the synchronizing station must be taken into account in the synchronization of these stations. The synchronization of fixed stations can be arranged in several ways known per se, for example by reception of the signals of radio beacons (for example, the Omega system) or by synchronization with known satellite signals. A fixed station may transmit its identity signal, which at the same time contains its coordinates of location, as well as the said time pulse, whenever a localization interrogation arrives from a mobile station; alternatively, it is possible to arrange that the fixed stations transmit localization signals at predetermined intervals, for example at one-second intervals, without interrogation.

The identity signal need not necessarily include any coordinates, if the coordinates of each fixed station in question have been recorded in the memory of the mobile station.

The signals may be transmitted, for example, on an auxiliary carrier wave of the radio telephone system or by an orthogonal modulation method, in which case they will not disturb any other traffic.

The invention and its other characteristics and advantages are described below in greater detail in the form of an example and with reference to the accompanying drawing, in which

Figure 1 depicts schematically one mobile station and five fixed stations,

Figure 2 depicts, in the form of a block diagram, a base station of a radio telephone system, and

Figure 3 depicts, respectively in the form of a block diagram, a mobile station.

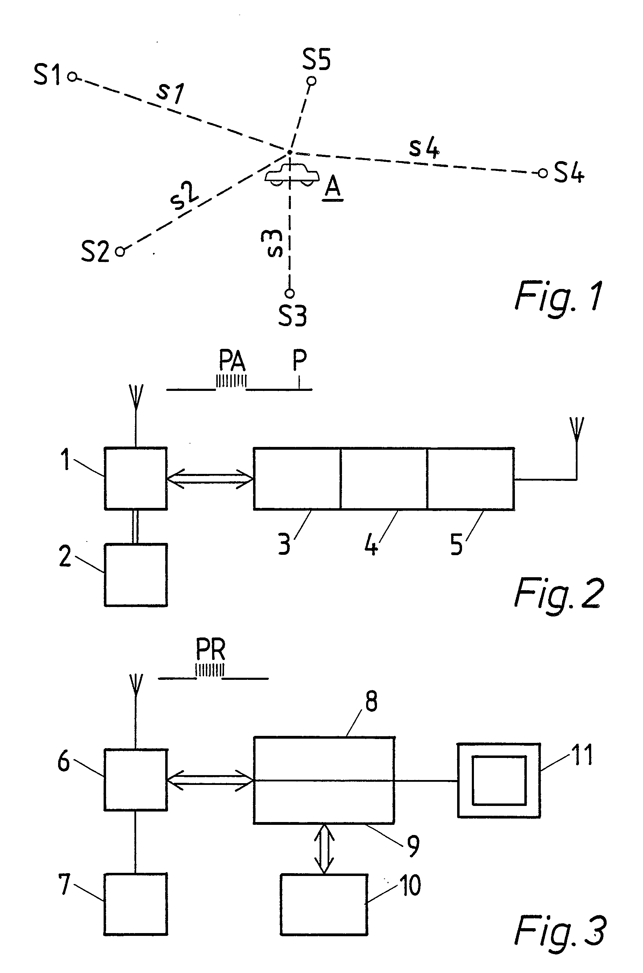

In the example case, the mobile station, which is indicated by reference A in Figure 1, is a radio telephone located in an automobile. In the area in which the vehicle is moving there are several base stations, belonging for example to a radio telephone system covering the whole country. In Figure 1, the fixed base stations are indicated by S1...S5, and the distances of these stations from station A are respectively s1...s5.

In Figure 2, reference numeral 1 indicates the basic part of a base station of the radio telephone system. Linked to it there are: a localization interrogation detector indicated by 2; a pulse former, indicated by 3, for forming the identity signal PA and the time pulse P; a coordinate memory indicated by 4; and a time pulse generator indicated by 5. The time pulse generator may be provided with its own synchronization signal receiver.

The mobile station shown in Figure 3 includes, first, a normal basic part 6 of a radio telephone and, in addition, a localization interrogation generator 7 connected to it, a memory 8 for received coordinates or identity, a microprocessor 9, a read memory 10, and a display unit 11.

Localization by the system described above takes place as follows: first it is assumed that all the fixed stations S1-S5, or at least their time pulse generators 5, are highly precisely synchronized in the same rhythm. Now, when a localization interrogation PR is transmitted from the mobile station to the first fixed station, for example S1, an identity signal PA and a precise time pulse P are received as a response from this station. As soon as the mobile station has received this first time pulse, it will transmit a corresponding interrogation PR to the next station, for example S2. In this manner all of the stations, or the necessary number of them, but at least three stations audible in the area, are contacted. If the arrival times of the time impulses received from the different stations S1-S5 are indicated as T1-T5, we obtain

$$T1 = To + n1 \cdot T_c + t1$$
$$T2 = To + n2 \cdot T_c + t2$$

etc.

where

To is a selected initial moment from which the localization interrogation and the counting of time are started,

n1-n5 are integers,

$T_c$ is the fixed transmission interval of the time pulses, for example 1 s, and t1-t5 are the travel times of the time pulses from stations SI-S5 to the mobile station A.

From this, for example the travel time difference is obtained .

$$t2-t1 = T2 - T1 + (n1-n2).T_c.$$

Since it is known that $T_c$ is much greater than t2-t1, i.e. that $(n1-n2).T_c$ is very close to T2-T1, it is easy to calculate what the integer n1-n2 is.

When the difference T2-T1 has been measured with precision at the mobile station, it is possible thereafter to calculate t2-t1, i.e. the difference between the travel times of radio waves between station S1 and station A and respectively between station S2 and station A.

When the said travel time difference is known, it is possible to calculate on the computer 9 the locus of those coordinate points for which the said travel time difference, i.e. the distance difference, becomes true. Thereafter, for example, t3-t1 is calculated in a corresponding manner, whereby a new locus of coordinate points is obtained, its intersection point with the first locus already determining the location of the automobile.

As was described above, the response, i.e. the identity signal PA and the time pulse P, can be triggered by a interrogation PR transmitted from the mobile station. Alternatively, identity signals PA and time pulses P can be transmitted from the different fixed stations continuously, without separate interrogation.

The counting of time at the mobile station can be effected, for example, so that the first time pulse P received triggers the precise pulse generator, and the time difference with the following time pulses received is counted by means of a pulse counter.

The memory 10 of the mobile station may contain, for example, various road maps so that these maps can be displayed on the display screen 11 together with the location of the automobile. In addition, the coordinates of location of the various fixed stations may be stored in the memory 10 in such a manner that the identity signal PA need not contain anything other than the coded data necessary for the identification of the station.

## Claims

1. A method for locating a mobile station (A), for example in a vehicle, in which method the mobile station receives time impulses from at least three fixed stations (S1...S5) of known location, the distance differences of the fixed stations are calculated on the basis of the arrival times of the time pulses from the various fixed stations, and the location of the mobile station is calculated on the basis of these distance differences, **characterized** in that a radio telephone network is used in such a way that the fixed stations (S1...S5) are maintained in precisely the same clock time and that they are equipped to transmit, in addition to a signal indicating their identity, also a precise time pulse (P), in which case the transmission times of the time pulses can be only at predetermined time intervals, for example at intervals of 1 second, that the mobile station receives both the identity signal (PA) and the time pulse (P), registers precisely the arrival time of the time pulse, and that the integer multiples of the predetermined time interval, which are of an order of magnitude different from the travel time differences of the time pulses (P), are eliminated in the calculations.

2. A method according to Claim 1, **characterized** in that at a fixed station (S1...S5) the transmission of the identity signal (PA) and the time pulse (P) is triggered by a localization interrogation (PR) transmitted from the mobile station.

3. A method according to Claim 1, **characterized** in that the fixed stations transmit identity signals (PA) and time pulses (P) at predetermined intervals, without interrogation.

4. A method according to Claim 1, **characterized** in that the identity signal (PA) comprises in coded form the coordinates of location of the fixed station.

5. A method according to Claim 1, **characterized** in that the identity signal (PA) comprises only the identity code of the fixed station and no coordinates, and that the data of the coordinates of the fixed stations are stored in a memory (10) at the mobile station.

6. A method according to any of the above claims, **characterized** in that the signals are transmitted on an auxiliary carrier wave of a radio telephone system or by a modulation method orthogonal relative to the principal transmission.

7. A mobile radio telephone station which comprises a microprocessor (9) for calculating the location of the mobile station on the basis of the identity signals and time pulses received, **characterized** in that it comprises coupling means (8) connected to the receiver part in order to receive the identity signal (PA) and precise time pulse (P) transmitted by the fixed station.

8. A radio telephone station according to Claim 7, **characterized** in that display means (11) are connected to the microprocessor (9) to indicate the location in the form of numerical data or a map display.

9. A radio telephone station according to Claim 8, **characterized** in that it comprises additionally coupling means (7) connected to the transmitter part in order to transmit a localization interrogation (PR) in a coded binary form.

10. A base station for a radio telephone system, **characterized** in that it comprises coupling means (3, 4, 5) for the transmission of a signal (PA) identifying the station and for the transmission of a precise time pulse (P) in such a manner that the transmission time of the pulse appears only at predetermined time intervals, for example at intervals of 1 second, all of the base stations (S1-S5) of the system being bound to the said appearance times of the time pulses.

S1

S5

s1

S4

A

s2

S2

s3

S3

*Fig. 1*

PA          P

1

2

3   4   5

*Fig. 2*

PR

8

6

11

7

9

10

*Fig. 3*